# EUROPEAN PATENT APPLICATION

(11) **EP 4 686 562 A1**
(43) Date of publication of application: **04.02.2026**
(21) Application number: 24382843.1
(22) Date of filing: 31.07.2024
(51) Int. Cl.: B32B 27/32, B32B 7/022, B32B 7/023, B32B 7/027, B32B 27/08, B32B 27/18

(54) **MULTILAYER GREENHOUSE FILMS**

(71) Applicant: Dow Global Technologies LLC, Midland, MI 48674 (US)
(72) Inventor: RINTJEMA, Jeroen, 43006 Tarragona (ES); EVANGELIO ARAUJO, Laura, 43006 Tarragona (ES); PUIG BOSCH, Pere, 43006 Tarragona (ES); PARKINSON, Shaun, 43006 Tarragona (ES)
(74) Representative: Boult Wade Tennant LLP

(57) **Abstract**

Provided are greenhouse films. The greenhouse films according to embodiments disclosed herein include layers including polymeric particles, compatibilizer, low density polyethylene, and linear low density to deliver a balance of desirable properties. The greenhouse films can deliver desirable light diffusion, light transmission, and IR effectiveness, as well as tensile performance.

## Description

### TECHNICAL FIELD

Embodiments of the present disclosure generally relate to greenhouse films, and processes for making the same.

### INTRODUCTION

The amount of ripe agricultural land on Earth continues to decrease as the global population continues to grow and food security diminishes in many areas. The need for alternative ways to efficiently grow plants that provide a reliable source of feedstocks or energy-including sustainable energy to humans via healthy and plant-based foods as well as sustainable energy to machines via bio-based fuels-continues to rise. Such alternative ways of achieving these global directives for the betterment of humanity include greenhouses (i.e., controllable biospheres) formed from, at least in part, greenhouse films. Greenhouses and greenhouse films play a significant role in sustainability for optimizing growth of plants and agriculture. They can provide a controlled environment that protect crops from climate changes, adverse weather events and pests, reduce thermal shock between day and night, and ensure effective weathering-leading to more ideal growth and harvest conditions for capsulated diverse and inclusive micro and macro-biomes.

Accordingly, there is a need for better greenhouse films to assist the worlds sustainability endeavors. Greenhouse films known in the art are made from polyethylene and ethylene vinyl acetate (EVA). The EVA can impart good heat retention in the form of IR effectiveness, but can be costly and can decrease film toughness. Other greenhouse materials attempt to incorporate polymeric particles to increase light dispersion, but challenges with maintaining a balance of properties, including mechanical, light diffusion, light transmission, and heat retention, remain. There is therefore a need for greenhouse films that provide a balance of these properties, including processability, tensile, light transmission, haze, and IR effectiveness.

### SUMMARY

Embodiments of the present disclosure meet one or more of the foregoing needs by providing a greenhouse film that can achieve desirable processability, tensile stress at break, tensile strain at break, visible light transmission, haze, and IR effectiveness.

In a first aspect, a greenhouse film according to embodiments disclosed herein comprises a first outer layer, a second outer layer, and one or more core layers, the one or more core layers positioned between the first outer layer and the second outer layer, a first core layer comprising a low density polyethylene and a linear low density polyethylene, and wherein the first outer layer comprises at least 10 wt.% of polymeric particles, based on the total weight of the first outer layer, a low density polyethylene, a compatibilizer, and a linear lower density polyethylene; the second outer layer comprises a low density polyethylene and a linear low density; and the film comprises from 5 to 10 wt.% polymeric particles, at least 30 wt.% low density polyethylene, and at least 35 wt.% of linear low density polyethylene, based on the total weight of the film.

In a second aspect, a process for making a greenhouse film according to embodiments in the first aspect is disclosed. The process according to embodiments disclosed herein comprises adding a linear low density polyethylene, a low density polyethylene, and a masterbatch comprising a compatibilizer and polymeric particles to an extruder; extruding via the extruder a film comprising a first outer layer comprising polymeric particles, the low density polyethylene, and the linear lower density polyethylene, a first core layer comprising a low density polyethylene and a linear low density polyethylene, and a second outer layer comprising a low density polyethylene and a linear low density polyethylene; wherein the first outer layer comprises at least 10 wt.% of polymeric particles, based on the total weight of the first outer layer, and the film comprises from 5 to 10 wt.% polymeric particles, at least 30 wt.% low density polyethylene, and at least 35 wt.% of linear low density polyethylene, based on the total weight of the film.

These and other embodiments are described in more detail in the Detailed Description.

### DETAILED DESCRIPTION

Aspects of the disclosed greenhouse films are described in more detail below. The greenhouse films are suitable for making greenhouses or biospheres and can have a wide variety of applications, including, for example, as coverings or liners or the like. In some embodiments, the greenhouse film meets the criteria of UNE-EN 13206:2017+A1:2020 (Published 10-21-2020 by Asociacion Espanola de Nomralizacion).

As used herein, the term "polymer" means a polymeric compound prepared by polymerizing monomers, whether of the same or a different type. The generic term polymer thus embraces the term homopolymer (employed to refer to polymers prepared from only one type of monomer), and the term copolymer or interpolymer. Trace amounts of impurities (for example, catalyst residues) may be incorporated into and/or within the polymer. A polymer may be a single polymer, a polymer blend, or a polymer mixture, including mixtures of polymers that are formed in situ during polymerization.

As used herein, the term "copolymer" means a polymer formed by the polymerization reaction of at least two structurally different monomers. The term "copolymer" is inclusive of terpolymers.

As used herein, the terms "polyethylene" or "ethylene-based polymer" shall mean polymers comprising a majority amount (>50 mol %) of units which have been derived from ethylene monomer. This includes polyethylene homopolymers and copolymers (meaning units derived from two or more comonomers). The terms "ethylene-based polymer" and "polyethylene" may be used interchangeably. Generally, polyethylene may be produced in gas-phase, fluidized bed reactors, liquid phase slurry process reactors, or liquid phase solution process reactors, using a heterogeneous catalyst system, such as Ziegler-Natta catalyst, a homogeneous catalyst system, comprising Group 4 transition metals and ligand structures such as metallocene, non-metallocene metal-centered, heteroaryl, heterovalent aryloxyether, phosphinimine, and others. Combinations of heterogeneous and/or homogeneous catalysts also may be used in either single reactor or dual reactor configurations.

The term "low density polyethylene" or "LDPE" as used herein refers to as "high pressure ethylene polymer" or "highly branched polyethylene" and is defined to mean that the polymer is partly or entirely homo-polymerized or copolymerized in autoclave or tubular reactors at pressures above 14,500 psi (100 MPa) with the use of free-radical initiators, such as peroxides (see for example US 4,599,392, which is hereby incorporated by reference). The LDPE, as used herein, have a density in the range of 0.910 to 0.940 g/cm³.

The term "linear low density polyethylene" or "LLDPE", includes resin made using the traditional Ziegler-Natta catalyst systems and chromium-based catalyst systems as well as single-site catalysts, including, but not limited to, substituted mono- or bis-cyclopentadienyl catalysts (typically referred to as metallocene), constrained geometry catalysts, phosphinimine catalysts & polyvalent aryloxyether catalysts (typically referred to as bisphenyl phenoxy), and includes linear, substantially linear or heterogeneous polyethylene copolymers or homopolymers. LLDPEs contain less long chain branching than LDPEs and includes the substantially linear ethylene polymers which are further defined in U.S. Patent 5,272,236, U.S. Patent 5,278,272, U.S. Patent 5,582,923 and US Patent 5,733,155; the homogeneously branched linear ethylene polymer compositions such as those in U.S. Patent No. 3,645,992; the heterogeneously branched ethylene polymers such as those prepared according to the process disclosed in U.S. Patent No. 4,076,698; and/or blends thereof (such as those disclosed in US 3,914,342 or US 5,854,045). The LLDPEs can be made via gas-phase, solution-phase or slurry polymerization or any combination thereof, using any type of reactor or reactor configuration known in the art. The LLDPE, as used herein, have a density in the range of 0.910 to 0.940 g/cm³.

The term "polymeric particles," as used herein, refers to polymeric particles comprising organic polymers, wherein the polymeric particles have at least 60% polymerized acrylic monomer units. The polymeric particles are described further below. In some embodiments, the polymeric particles are spherical particles having an inner core of an alkyl acrylate copolymer surrounded by a methyl methacrylate copolymer.

The terms "comprising," "including," "having," and their derivatives, are not intended to exclude the presence of any additional component, step or procedure, whether or not the same is specifically disclosed. In order to avoid any doubt, all compositions claimed through use of the term "comprising" may include any additional additive, adjuvant, or compound, whether polymeric or otherwise, unless stated to the contrary. In contrast, the term, "consisting essentially of" excludes from the scope of any succeeding recitation any other component, step or procedure, excepting those that are not essential to operability. The term "consisting of" excludes any component, step or procedure not specifically delineated or listed.

Disclosed herein are greenhouse films. The greenhouse film comprises a first outer layer, a second outer layer, and one or more core layers, the one or more core layers positioned between the first outer layer and the second outer layer. The number of film layers of the greenhouse film are not particularly limited, other than that the film has at least three layers, including a first outer layer, a first core layer, and a second outer layer. The position of the first core layer (e.g., when there are multiple core layers) is not particularly limited other than that it must be positioned between the first and second outer layers. The greenhouse film can comprise 4, 5, 6, 7, 8, 9, 10, 11 or more layers. In one embodiment, the greenhouse film comprises five layers, including a first outer layer, a first core layer, a second core layer, a third core layer, and a second outer layer (A/B/C/D/E, where A and E are outer layers). The film can have different thicknesses. In some embodiments, the film is between 25 to 500 microns thick, or between 25 to 300 microns thick. The film can have a thickness of at least 50, 75, 100 or 200 microns and at most 500, 400, 300, 250, or 200 microns thick. The film can have different layer thickness ratios. In some embodiments, the film is a five layer film having a layer ratio of 20/20/20/20/20 with equivalently distributed layers or is a five layer film having a layer ratio of 15/20/30/20/15. In some embodiments, each layer of the film is between 15 to 30% of the total thickness of the film. In some embodiments, the first outer layer is between 15 to 30% of the total thickness of the film. The greenhouse film according to embodiments disclosed herein comprises a first outer layer comprising polymeric particles, a compatibilizer, a low density polyethylene, and a linear low density polyethylene. Layers other than the first outer layer of the film can also comprise polymeric particles, a compatibilizer, a low density polyethylene, and/or a linear low density polyethylene, and any such layer can comprise the same or different commercially available or same or different type of polymeric particles, compatibilizer, low density polyethylene, and/or a linear low density polyethylene as used in the first outer layer. In some embodiments, the greenhouse film comprises ethylene vinyl acetate. In some embodiments, the greenhouse films is void of ethylene vinyl acetate, or comprises less than 10 wt.%, less than 5 wt.%, less than 3 wt.%, or less than 1 wt.% ethylene vinyl acetate, based on the total weight of the film.

Without being bound by theory, it is submitted that the configuration of the film according to embodiments disclosed herein comprising a first outer layer comprising polymer particles, low density polyethylene, and linear low density in conjunction with the other layers of films contributes to the film having desirable haze, IR effectiveness, visible light transmission, and tensile properties for use to form greenhouses in comparison to the structures known in the prior art. The balance of polymeric particles, low density polyethylene, linear low density polyethylene, and compatibilizer in the first outer layer, along with the balance of linear low density polyethylene and low density polyethylene elsewhere in the films can deliver, according to embodiments disclosed herein, good processability, bubble stability, mechanical properties, haze, IR effectiveness, and light transmission suitable for use in greenhouse films.

For instance, the greenhouse film according to embodiments disclosed herein can have at least one of the following properties: a tensile stress at break in the machine direction of at least 20 MPa, or at least 21 MPa, or at least 22 MPa, or at least 23MPa); a tensile strain at break in the machine direction of at least 500%, (or at least 550%, or at least 575%, or at least 600%).

In some embodiments, the greenhouse film has a visible light transmission of at least 80% (or at least 85%); a haze of at least 70% (or at least 80%, or at least 90%); and/or an IR effectiveness of at least 65% (or at least 70%, or at least 75%). Visible light transmission and IR effectiveness are measured in accordance with the test method descriptions below at a thickness of 200 micron and measurements are normalized according to thickness.

### Low Density Polyethylene

The greenhouse film comprises low density polyethylene. The first outer layer comprises a low density polyethylene. The first core layer also comprises a low density polyethylene. The second outer layer also comprises a low density polyethylene. The low density polyethylene of the first outer layer, the first core layer, and the second outer layer can be the same type of low density polyethylene (e.g., same commercial grade with the same specifications for density, melt index, etc.) or can be different.

The greenhouse film comprises at least 30 wt.% low density polyethylene, based on the total weight of the film. In some embodiments, the greenhouse film comprises at least 35 at least 35 wt.%, or at least 40 wt.%, or at least 45 wt.% low density polyethylene, based on the total weight of the film, or from 25 wt.% to 50 wt.%, or 30 wt.% to 45 wt.% of low density polyethylene, based on the total weight of the film. For example, a three layer film comprising 10 wt.% of a low density polyethylene in the first outer layer, 10 wt.% of a low density polyethylene in the first core layer, and 10 wt.% of a low density polyethylene in the second outer layer, where the preceding weigh percent is based on the total weight of each layer, has 30 wt.% low density polyethylene, based on total weight of the three layer film, where each of the layers can comprise the same or different type of low density polyethylene.

Commercially available low density polyethylene suitable for use in the greenhouse films include those commercially available from The Dow Chemical Company such as AGILITY^{™} AT 1604 Performance LDPE and LDPE 310E. Other commercially available low density polyethylene include Sabic 2100, Carmel Ipethene 4203, Braskem LD7000A, Celanese AT505, and Repsol PE-033.

### Linear Low Density Polyethylene (LLDPE)

The greenhouse film comprises linear low density polyethylene (LLDPE). The first outer layer comprises a linear low density polyethylene. The first core layer comprises a linear low density polyethylene. The second outer layer comprises a linear low density polyethylene. The linear low density polyethylene of the first outer layer, the second outer layer, and the first core layer can be the same type of linear low density polyethylene (e.g., same commercial grade with the same specifications for density, melt index, etc.) or can be different. In some embodiments, the greenhouse film comprises at least 35 wt.% of linear low density polyethylene, based on the total weight of the film. In some embodiments, the greenhouse film comprises a lower limit of at least at least 40 wt.%, or at least 45 wt.%, or at least 50 wt.%, linear low density polyethylene, and an upper limit of at most 60 wt.%, or at most 55 wt.% linear low density polyethylene, based on the total weight of the film. For example, a three layer film comprising 10 wt.% of a linear low density polyethylene in the first outer layer, 10 wt.% of a linear low density polyethylene in the first core layer, and 10 wt.% of a linear low density polyethylene in the second outer layer, where the preceding weigh percent is based on the total weight of each layer, has 30 wt.% linear low density polyethylene, based on total weight of the three layer film, where each of the layers can comprise the same or different type of linear low density polyethylene.

In some embodiments, the film comprises from 70 to 90 wt.% linear low density polyethylene and low density polyethylene, based on the total weight of the film.

Commercially available linear low density polyethylenes suitable for use in the greenhouse films include those commercially available from The Dow Chemical Company such as DOWLEX^{™} 2645 and DOWLEX^{™} 2045G. Other commercially available linear low density polyethylene include Exceed 1018, Sabic Supeer 7118, Marlex 7109, Ineos LL8109, and Novapol PF0118

### Polymeric Particles

The greenhouse film comprises from 5 to 10 wt.% polymeric particles, based on the total weight of the film. The greenhouse film can comprise from 5, 6, 7, or 8 to 10, 9, 8, 7, or 6 wt.% polymeric particles, based on the total weight of the film. The first outer layer comprises at least 10 wt.% of polymeric particles based on the total weight of the first outer layer. The first outer layer can comprise from 10, 12, 15, or 18 to 25, 22, 20, 18, 15, or 12 wt.% polymeric particles, based on the total weight of the first outer layer. In some embodiments, the greenhouse film comprises a masterbatch comprising polymeric particles, a low density polyethylene, and a compatibilizer. In some embodiments, the greenhouse film comprises a lower limit of at least 5.0, at least 5.5, at least 6.0, at least 7.0, or at least 7.5 wt.% of polymeric particles and an upper limit of at most 10.0 wt.%, at most 9.0 wt.%, at most 8.5 wt.%, at most 8.0 wt.%, or at most 7.5 wt.% of polymeric particles, based on the total weight of the film. In some embodiments, the polymeric particles are acrylic breads comprising an alkylacrylate copolymer.

In some embodiments, the second outer layer comprises at least 10 wt.% of polymeric particles, based on the total weight of the second layer. In some embodiments, where the first core layer is directly adjacent to the first outer layer, the first core layer comprises polymeric particles. In embodiments where polymeric particles are present in layers other than the first outer layer, the polymeric particles can be the same or different type in each of the layers.

The polymeric particles comprise organic polymers, preferably addition polymers, and preferably are substantially spherical. Average particle diameter is determined as the arithmetic mean particle diameter. In some embodiments, the polymeric particles have an average particle diameter no less than 0.5 µm. All individual values and subranges of 0.5 µm and higher are included herein and disclosed herein; for example, the polymeric particles can have an average particle diameter of at least 0.7 µm, at least 0.9, at least 1 µm, at least 1.5 µm, at least 2 µm, at least 2.5 µm, at least 3 µm, or at least 3.5 µm. In some embodiments, these particles have an average particle diameter no greater than 15 µm. All individual values and subranges of 15 µm and less are included herein and disclosed herein; for example, the particles can have an average particle diameter of no greater than 10 µm, no greater than 8 µm, no greater than 6 µm, or no greater than 5.5 µAm. In some embodiments, the polymeric particles have a particle size distribution indicating a single mode; the width of the particle size distribution at half-height is from 0.1 to 3 µm in some embodiments, and is from 0.2 to 1.5 µm in some other embodiments. The film may contain particles having different average diameters provided that particles of each average diameter have a particle size distribution as described immediately above. The particle size distribution is determined using a particle size analyzer.

Refractive index (RI) values of the polymeric particles can be determined at the sodium D line, where X =589.29 nm at 20 ° C.. The refractive index of the polymeric particle can be from 1.474 to 1.545. All individual values and subranges from 1.474 to 1.545 are included herein and disclosed herein; for example, the refractive index is from 1.49 to 1.53, from 1.50 to 1.53, or from 1.52 to 1.545. Generally, the refractive index of the continuous polymeric phase is from 1.4 to 1.6. All individual values and subranges from 1.4 to 1.6 are included herein and disclosed herein; for example the refractive index of the continuous polymeric phase is from 1.45 to 1.55, from 1.47 to 1.53, or from 1.48 to 1.52. Generally, the refractive index of the polymeric particle is greater than the refractive index of the continuous polymeric phase in the infrared region, i.e., from 800-2500 nm.

Refractive index differences stated herein are absolute values. Generally, the refractive index difference (i.e., the absolute value of the difference) measured from 800 nm to 2500 nm between the polymeric particle and the continuous polymeric phase is at least 0.06. All individual values and subranges of 0.06 and greater are included herein and disclosed herein; for example, the refractive difference is at least 0.08, at least 0.09, or at least 0.1. Generally, the refractive index difference measured from 800 nm to 2500 nm between the polymeric particle and the continuous polymeric phase is no greater than 0.2. All individual values and subranges of 0.2 and less are included herein and disclosed herein; for example, the refractive index difference is no greater than 0.17, or is no greater than 0.15. Generally, the refractive index difference measured from 400 nm to 800 nm between the polymeric particle and the continuous polymeric phase is at least 0.04. All individual values and subranges of 0.04 and greater are included herein and disclosed herein; for example, the refractive index difference is at least 0.05, at least 0.06, at least 0.07, or at least 0.08. Generally, the refractive index difference measured from 400 nm to 800 nm between the polymeric particle and the continuous polymeric phase is no greater than 0.2, is no greater than 0.15 in various other embodiments, and is no greater than 0.1 in various other embodiments. In various embodiments, the polymeric particles are those having a continuous refractive index gradient ("GRIN" particle, see, e.g., US 2009/0097123). GRIN particles have a refractive index which increases continuously from the center of the particles to the surface. Generally, GRIN particles have a refractive index at the surface from 1.46 to 1.7. All individual values and subranges between 1.46 and 1.7 are included herein and disclosed herein; for example, the refractive index at the surface is from 1.52 to 1.68, from 1.53 to 1.65, or from 1.54 to 1.6. Generally, GRIN particles have a refractive index at the center from 1.46 to 1.7. All individual values and subranges between 1.46 and 1.7 are included herein and disclosed herein, for example, the refractive index at the center is from 1.46 to 1.52, or 1.47 to 1.51, or 1.55 to 1.6, or 1.6 to 1.7.

The micro GRIN lens reduce the loss of light and minimize spherical and chromatic aberration. Because the refractive index of the GRIN sphere lens varies continuously within the lens media, a unique focus is defined by light rays that transmit through the lens. A consequence of this is the observation that light rays are bent with the change in refractive index. The bending of the light rays results in the elimination of light loss through total internal reflection, and the creation of a well defined focal point and focal length, unique to the spherical lens geometry.

The GRIN polymer particles are spherical in geometry and possess unique morphology. There are two well defined cases of GRIN polymer particles: In the less familiar case, which is described as case I, the refractive index of the spherical particle decreases continuously from the surface of the particle to its central core. In the more well known second type of GRIN polymer particle, case II; the refractive index of the particle increases continuously from the outer spherical surface of the particle to the inner core. These lens-like polymer particles enhance the refraction of light rays incident upon the polymeric matrix in which these particles are coated or dispersed. The overall effect of high gain in optical intensity, from enhanced light refraction, is a reduction in loss of incident light rays to reflection and diffraction. Consequently, the particles enhance light diffusion, in case I; and transmission with low loss of photons to total internal reflection, in case II.

GRIN particles may have a core derived from a polymer seed used to produce the GRIN particle. Generally, the core of the GRIN particle is no more than 95 wt % of the particle, is no more than 80 wt % in various other embodiments, is no more than 60 wt % in various other embodiments, is no more than 40 wt % in various other embodiments, and is no more than 20 wt % in various other embodiments. The refractive index of a GRIN particle for purposes of calculating a refractive index difference is the refractive index at the particle surface. The refractive index can vary from high in the core to low on the surface of the particle and low in the core and high on the surface of the particle.

A variation in refractive index can be measured by the Mach-Zehnder Interference Microscope. The measuring technique, defined as the shearing interference method, is centered around the determination of the optical path difference. The path difference is understood to be the difference between two optical path lengths which are caused by differences in the refractive index and or thickness. The interference-microscopic path difference is the difference between the optical path length in an object and that in its surroundings. The optical path length S is the product of the distance d traversed by the light rays and the refractive index n of the medium that the light rays pass through.

After synthetic preparation, the spheres can be evaluated for optical properties (refractive index profile by path difference) by first immersion in a refractive index matching fluid which has refractive index (Nd=1.54) at 25° C. The interference or fringe patterns can be taken by a CCD camera in which the pixels were estimated, after calibration with a microscope scale bar, to be about 100 nm in the object plane. The polymeric particles comprise at least 60% polymerized acrylic monomer units. Acrylic monomers units include acrylic acid (AA), methacrylic acid (MAA), esters of AA and MAA, itaconic acid (IA), crotonic acid (CA), acrylamide (AM), methacrylamide (MAM), and derivatives of AM and MAM, e.g., alkyl (meth)acrylamides. Esters of AA and MAA include, but are not limited to, alkyl, hydroxyalkyl, phosphoalkyl and sulfoalkyl esters, e.g., methyl methacrylate (MMA), ethyl methacrylate (EMA), butyl methacrylate (BMA), hydroxyethyl methacrylate (HEMA), hydroxyethyl acrylate (HEA), hydroxypropyl methacrylate (HPMA), hydroxybutyl acrylate (HBA), methyl acrylate (MA), ethyl acrylate (EA), butyl acrylate (BA), 2-ethylhexyl acrylate (EHA), cyclohexyl methacrylate (CHMA), benzyl acrylate (BzA) and phosphoalkyl methacrylates (e.g., PEM).

The polymeric particles comprise at least 60 mole percent (mole % or %) of acrylic monomer units. All individual values and subranges of 60 mole % and greater are included herein and disclosed herein; for example, the polymeric particles can include at least 65 mole % of acrylic monomer units, at least 70 mole % of acrylic monomer units, at least 75 mole % of acrylic monomer units, or at least 80 mole % of acrylic monomer units. The polymeric particles can also include styrenic monomers which can include styrene, a-methylstyrene; 2-, 3-, or 4-alkylstyrenes, including methyl- and ethyl-styrenes. In an embodiment, the styrenic monomer is styrene.

In some embodiments, the polymeric particles comprise at least 70 mole % of acrylic and styrenic monomer units. All individual values and subranges of 70 mole % and greater are included herein and disclosed herein; for example, the polymeric particles comprise at least 80 mole % of acrylic and styrenic monomer units, at least 90 mole % of acrylic and styrenic monomer units, at least 95 mole % of acrylic and styrenic monomer units, or at least 97 mole % of acrylic and styrenic monomer units. Generally, the polymeric particle also comprises from 0 to 5 mole % of acid monomer units (e.g., acrylic acid (AA), methacrylic acid (MAA), itaconic acid (IA), crotonic acid (CA), or from 0.5 to 4% AA and/or MAA, and may also contain small amounts of residues of vinyl monomers.

In some embodiments, the polymeric particles are crosslinked. Crosslinking prevents the particles from melting at film extrusion temperatures. Crosslinked polymeric particles contain crosslinkers. Crosslinkers are monomers having two or more ethylenically unsaturated groups, or coupling agents (e.g., silanes) or ionic crosslinkers (e.g., metal oxides). Crosslinkers having two or more ethylenically unsaturated groups may include, e.g., divinylaromatic compounds, di-, tri- and tetraacrylate or methacrylate esters, di-, tri- and tetra-allyl ether or ester compounds and allyl acrylate or allyl methacrylate. Examples of such monomers include divinylbenzene (DVB), trimethylolpropane diallyl ether, tetraallyl pentaerythritol, triallyl pentaerythritol, diallyl pentaerythritol, diallyl phthalate, diallyl maleate, triallyl cyanurate, Bisphenol A diallyl ether, allyl sucroses, methylene bisacrylamide, trimethylolpropane triacrylate, allyl methacrylate (ALMA), ethylene glycol dimethacrylate (EGDMA), hexane-1,6-diol diacrylate (HDDA) and butylene glycol dimethacrylate (BGDMA). In some embodiments, the amount of polymerized crosslinker residue in the polymeric particle is no more than 10%. All individual values and subranges of 10% or less are included herein and disclosed herein; for example, the polymerized crosslinker residue in the polymeric particles is no more than 9%, no more than 8%, no more than 7%, or no more than 6%. Generally, the amount of polymerized crosslinker residue in the polymeric particle is at least 0.1%. All individual values and subranges of 0.1% or greater are included herein and disclosed herein; for example, the amount of polymerized crosslinker residue in the polymeric particle is at least 0.5%, at least 1%, at least 2%, or at least 3%. If crosslinkers are present, they have a molecular weight from 100 to 250. All individual values and subranges from 100 to 250 are included herein and disclosed herein; for example, the crosslinkers can have a molecular weight from 110 to 230, from 110 to 200, or from 115 to 160. Generally, crosslinkers are difunctional or trifunctional, i.e., they are diethylenically or triethylenically unsaturated, respectively. In some embodiments, the surface of the acrylic particles can be chemically functionalized during the second stage polymerization with (a) 3-(Trimethoxysilyl) propyl methacrylate (MATS), or (b) Vinyl Trimethoxy Silane (VTMS), and (c) Acetoacetoxy Ethyl Methacrylate (AAEM). Each of these monomers can serve as coupling agents to the polyolefin matrix which forms the continuous phase of the greenhouse film.

In an alternate embodiment, a siloxane coupling agent from 0.1% to 10% by weight, preferably 3% to 7%, based on the dry weight of the polymeric particle, is added to the polymeric polymer. By "aminosilane" herein is meant a non-polymeric organofunctional alkoxysilane molecule bearing at least one primary or secondary amino group such as, for example, (3-aminopropyl)-triethoxysilane [CAS# 919-30-2], (3-aminopropyl)-diethoxy-methylsilane, (3-aminopropyl)-dimethyl-ethoxysilane, (3-aminopropyl)-trimethoxysilane [CAS# 13822-56-5], and N-beta-(aminoethyl)-gamma-aminopropyltrimethoxysilane. The siloxane coupling agent is added to the polymeric particles after preparation but prior to spray drying. The polymeric particles are generally prepared in an aqueous medium by known emulsion polymerization techniques, followed by spray drying of the resulting polymer latex. Spray drying typically results in clumps of polymeric particles having an average diameter of 0.5 to 15 µm.

Commercially available compositions comprising polymeric particles include PARALOID^{™} EXL-5136, commercially available from The Dow Chemical Company.

### Compatibilizer

The greenhouse film comprises a compatibilizer in at least its first outer layer. The compatibilizer has a graft copolymer having a non-polar backbone and a grafted polar function monomer, wherein the polar functional monomer is vinyl acetate, vinyl alcohol, anhydride, amino, amide, or acrylate, and is preset in an amount from 0.1 to 40% by weight, based on the total weight of the compatibilizer. The compatibilizer can be part of a masterbatch comprising polymeric particles and low density polyethylene. In some embodiments, the compatibilizer is an ethylene maleic anhydride copolymer. In some embodiments, the compatibilizer is a propylene maleic anhydride copolymer. The compatibilizer can serve to react with different polymer chains to improve the interfacial adhesion between the chains and assist with the properties of the greenhouse film. The compatibilizer can improve compatibility between the polyethylene and the polymeric particles, in addition to providing stability, mechanical properties, and overall performance. In some embodiments, the first outer layer comprises at least 1 wt.% of a compatibilizer, based on the total weight of the first outer layer. In some embodiments, the first outer layer comprises at most 5 wt.% or at most 4 wt.% or at most 3 wt.% of a compatibilizer, based on the total weight of the first outer layer. When polymer particles are present in other layers, a compatibilizer (which can be the same type or different than the compatibilizer in the first outer layer) can be used in such layers. For instance, in embodiments where the second outer layer comprises polymeric particles, the second outer layer can also comprise at least 1 wt.% or at most 5 wt.% or at most 4 wt.% or at most 3 wt.% compatibilizer, based on the total weight of the second outer layer. Commercially available compatibilizers include FUSABOND^{™} N493 commercially available from The Dow Chemical Company. Other compatibilizers known in the art include Orevac 18300 and 18362 as well as Admer NF408E and NF528E.

### The First Outer Layer

The greenhouse film comprises a first outer layer. The first outer layer comprises polymeric particles, a low density polyethylene, a compatibilizer, and a linear lower density polyethylene. The first outer layer comprises at least 10 wt.% of polymeric particles, based on the total weight of the first outer layer. In some embodiments, the first outer layer comprises a lower limit of at least 12 wt.%, at least 14 wt.%, at least 15 wt.%, at least 16 wt.%, at least 18 wt.% and an upper limit of at most 35 wt.%, or at most 33 wt.%, or at most 32 wt.%, or at most 31 wt.%, or at most 30 wt.%, or at most 28 wt.%, or at most 25 wt.%, or at most 20 wt.% polymer particles, based on the total weight of the first outer layer.

In some embodiment, the first outer layer comprises a lower limit of at least 10 wt.%, at least 15 wt.%, at least 20 wt.%, at least 30 wt.%, or at least 35 wt.% and an upper limit of at most 50 wt.%, or at most 45 wt.% of the low density polyethylene, based on the total weight of the first outer layer. In some embodiments, the first outer layer comprises at least 20 wt.% or at least 25 wt.% and at most 40 wt.% or at most 35 wt.% of the linear low density polyethylene (LLDPE). In some embodiments, the low density polyethylene of the first outer layer has a density of from 0.910 to 0.930 g/cm³ and a melt index (I2) from 0.1 to 1.0 g/10 min. In some embodiments, the linear low density polyethylene of the first outer layer has a density of from 0.910 to 0.930 g/cm³ and a melt index (I2) from 0.1 to 1.5 g/10 min.

### The First Core Layer

The greenhouse film comprises a first core layer. The first core layer can be directly adjacent to the first outer layer (i.e., in direct contact with the first outer layer). The first core layer comprises a low density polyethylene and a linear low density polyethylene. In some embodiments, the first core layer comprises a lower limit of at least 10 wt.%, at least 20 wt.%, at least 30 wt.%, at least 35 wt.% and an upper limit of at most 50 wt.%, at most 45 wt.%, at most 40 wt.%, of a low density polyethylene, based on the total weight of the first core layer. In some embodiments, the first core layer comprises a low limit of at least 10 wt.%, at least 20 wt.%, at least 30 wt.%, at least 35 wt.%, at least 40 wt.%, at least 45 wt.%, at least 50 wt.%, or at least 55 wt.%, and an upper limit of at most 70 wt.%, at most 65 wt.%, at most 60 wt.%, of a linear low density polyethylene, based on the total weight of the first core layer.

In some embodiments, where the first core layer is adjacent to the first outer layer, the first core layer comprises polymeric particles. In such embodiments, the first core layer comprises a lower limit of at least 5 wt.%, at least 10 wt.%, or at least 15 wt.%, and an upper limit of at most 30 wt.%, or at most 25 wt.%, of polymeric particles. In such embodiments, the polymeric particles can be the same or different polymeric particles as in the first outer layer. In such embodiments, the first core layer can comprise a compatibilizer.

### Second Outer Layer

The greenhouse film comprises a second outer layer. The second outer layer comprises a low density polyethylene and a linear lower density polyethylene. In some embodiments, the second outer layer comprises a low density polyethylene, a linear low density polyethylene, polymer particles, and a compatibilizer.

In some embodiments, the second outer layer comprises a lower limit of at least 10 wt.%, at least 20 wt.%, at least 30 wt.%, at least 35 wt.%, at least 40 wt.%, at least 50 wt.%, at least 60 wt.%, at least 70 wt.% and an upper limit of at most 95 wt.%, at most 90 wt.%, at most 85 wt.%, at most 80 wt.%, at most 75 wt.%, at most 70 wt.%, at most 60 wt.%, at most 50 wt.%, at most 45 wt.%, at most 40 wt.%, of a low density polyethylene, based on the total weight of the second outer layer. In some embodiments, the second outer layer comprises a lower limit of at least 5 wt.%, at least 10 wt.%, or at least 15 wt.%, and an upper limit of at most 35 wt.%, at most 30 wt.%, at most 25 wt.%, of a linear low density polyethylene, based on the total weight of the second outer layer.

In some embodiments, where the second outer layer comprises polymeric particles, the second outer layer can comprise a lower limit of at least 5 wt.%, at least 10 wt.%, or at least 15 wt.%, and an upper limit of at most 30 wt.%, or at most 25 wt.%, of polymeric particles. In such embodiments, the polymeric particles can be the same or different polymeric particles as in the first outer layer. In such embodiments, the second outer layer can comprise a compatibilizer.

### Other Layers

In addition to the first outer layer, the second outer layer, and the first core layer, the greenhouse film can comprise additional core layers. For example, the greenhouse film can comprise five layers, wherein the first core layer is directly adjacent to the first outer layer and a second core layer, and wherein a third core layer is directly adjacent to the second outer layer. In such an embodiment, the second core layer can comprise a low density polyethylene and a linear low density polyethylene. The second core layer can comprise amounts of a low density polyethylene and a linear low density polyethylene similar to or the same as the first core layer. In such embodiments, the second core layer can be void of polymeric particles and void of a compatibilizer. Similarly, the third core layer can comprise a low density polyethylene and a linear low density polyethylene. The third core layer can comprise amounts of a low density polyethylene and a linear low density polyethylene similar to or the same as the first core layer. In such embodiments, the third core layer can be void of polymeric particles and void of a compatibilizer.

### Process for Making Greenhouse Film

The greenhouse film can be formed via a film casting or blown-film processes. A process for making a greenhouse film according to embodiments disclosed herein comprises adding a linear low density polyethylene, a low density polyethylene, and a masterbatch comprising a compatibilizer and polymeric particles to an extruder; extruding via the extruder a film comprising a first outer layer comprising polymeric particles, the low density polyethylene, and the linear lower density polyethylene, a first core layer comprising a low density polyethylene and a linear low density polyethylene, and a second outer layer comprising a low density polyethylene and a linear low density polyethylene; wherein the first outer layer comprises at least 10 wt.% of polymeric particles, based on the total weight of the first outer layer, and the film comprises from 5 to 10 wt.% polymeric particles, at least 30 wt.% low density polyethylene, and at least 35 wt.% of linear low density polyethylene, based on the total weight of the film. In such embodiments, the masterbatch added for forming the film can comprise polymeric particles, a compatibilizer, and a low density polyethylene. The process can be adjusted to form films as described herein, for example, extruding additional layers, adding more or less amounts of polymer compositions, adjusting the layer ratios, and adjusting the thickness of the films.

A masterbatch can be used in making the films disclosed herein. In some embodiments, the masterbatch comprises 40 to 60 wt.% polymeric particles, 30 to 50 wt.% low density polyethylene, and 1 to 10 wt.% compatibilizer.

### TEST METHODS

### Density

Density is measured in accordance with ASTM D792, and expressed in grams/cm³ (g/cm³ or g/cc).

### Melt Index (I₂)

The procedure described in ASTM D1238 is followed to determine the melt index of the low density polyethylene and linear low density polyethylene. Method B of ASTM D1238 is used.
Tensile Stress at Break MD by ASTM D882-18
Tensile Strain at Break MD by ASTM D882-18
Visible Light Transmission by ASTM D1003-13
Haze by ASTM D1003-13

### IR Effectiveness

IR Effectiveness is measured in accordance with EN 13206:2017+A1. The method consists of measuring the IR transmission spectrum within wave numbers ranging from 1 430 cm-1 to 770 cm-1 (between 7 µm and 13 µm wavelengths). This range of wavelengths corresponds to the field of maximum emission of the energy irradiated by the earth's surface. An infrared spectrophotometer is used to measure and record continuously transmittance between 1 500 cm-1 and 700 cm-1, along with an analytical balance with an accuracy of 0.1 mg. The measurement is performed on five test pieces cut from the film. Each test piece on the specimen holder of the spectrophotometer and record the spectrum of transmission from 1 500 cm-1 to 700 cm-1. Measure the area between the line corresponding to a transmittance of 100 % and the curve of the spectrum with the help of a planimeter or by using the following weighing method. Cut a sheet with the trace of the spectrum (or a copy of it) at 1 430 cm-1 and 770 cm-1, along the lines of 0 % and 100 % transmittance. Weigh this rectangle to an accuracy of 0,1 mg. This mass shall be stated as P100. Then cut along the outline of the spectrum and weigh the part representing the transmission. According to the weighing method, the IR effectiveness (ηir) in the range of wavelengths between 7 µm to 13 µm is given by the ratio: 100100100×-=PPPtirη. Calculate the arithmetic average value of the five measurements. The arithmetic average value shall fulfil the requirements of Table 4 and 5, as applicable.

### EXAMPLES

### Materials Used

The following materials are included in the examples discussed below.

DOWLEX^{™} 2645 ("Dowlex") - a linear low density polyethylene resin having a density of 0.918 g/cc and a melt index of 0.85 g/10 min, commercially available from The Dow Chemical Company (Midland, MI).

AGILITY^{™} AT 1604 Performance LDPE ("Agility") - a low density polyethylene resin having a density of 0.921 g/cc and a melt index of 0.25 g/10 min, commercially available from The Dow Chemical Company (Midland, MI).

DOW^{™} LDPE 310E - a low density polyethylene resin having a density of 0.923 g/cc and a melt index of 0.75 g/10 min, commercially available from The Dow Chemical Company (Midland, MI). A Master Batch ("MB") - 50 wt.% PARALOID^{™} EXL-5136, 45 wt.% DOW^{™} LDPE 310E, and 5 wt.%, FUSABOND^{™} E265. PARALOID^{™} EXL-5136 are polymeric polymers and acrylic beads having 5 microns diameter and having an inner core of an alkyl acrylate copolymer surrounded by a methyl methacrylate copolymer. The PARALOID^{™} EXL-5136 comprise at least 60 mole percent (mole % or %) of acrylic monomer units. FUSABOND^{™} E265 is a compatibilizer and an anhydride modified high density polyethylene having a density of 0.950 g/cc and a melt index of 12 g/10 min.

### Film Fabrication

Greenhouse film structures of 200 micrometers are formed on a Collin 9L Co-ex blown extrusion line in Tarragona, Spain. The line is equipped with 20 and 25 mm extruders using a die-gap of 1.8 mm and output of around 20 kg/h. The resins were extruded at 220 degrees to produce a film of 510 mm width. The above described materials are used to produce the film having a layer distribution or ratio as specified in the tables below for each of the samples. In all films with exception of comparative film 2, the polymeric particles are part of the masterbatch, MB, as defined above. Table 1 shows that the inventive structures have significantly higher IR effectiveness and haze values in combination with maintained or better light transmission, tensile stress and tensile strain.

### Comparative Film 1 - No Particles

| Layer | Dowlex (wt.%) | Agility (wt.%) | MB (wt.%) | Layer Ratio |
|---|---|---|---|---|
| A | 30 | 70 | 0 | 0.20 |
| B | 60 | 40 | 0 | 0.20 |
| C | 80 | 20 | 0 | 0.20 |
| D | 60 | 40 | 0 | 0.20 |
| E | 20 | 80 | 0 | 0.20 |
| Total wt.% | 50.00 | 50.00 | 0.00 | 1.00 |

### Comparative Film 2

| Layer | Dowlex (wt.%) | Agility (wt.%) | Acrylic beads (wt.%) | Layer Ratio |
|---|---|---|---|---|
| A | 20 | 80 | 0 | 0.15 |
| B | 75 | 10 | 15 | 0.70 |
| C | 0 | 100 | 0 | 0.15 |
| Total wt.% | 55.50 | 34.00 | 10.50 | 1.00 |

### Comparative Film 3

| Layer | Dowlex (wt.%) | Agility (wt.%) | MB (wt.%) | Layer Ratio |
|---|---|---|---|---|
| A | 60 | 40 | 0 | 0.20 |
| B | 30 | 10 | 60 | 0.20 |
| C | 80 | 20 | 0 | 0.20 |
| D | 60 | 40 | 0 | 0.20 |
| E | 20 | 80 | 0 | 0.20 |
| Total wt.% | 50.00 | 38.00 | 12.00 | 1.00 |

### Inventive Film 1

| Layer | Dowlex (wt.%) | Agility (wt.%) | MB (wt.%) | Layer Ratio |
|---|---|---|---|---|
| A | 30 | 30 | 40 | 0.20 |
| B | 60 | 0 | 40 | 0.20 |
| C | 80 | 20 | 0 | 0.20 |
| D | 60 | 40 | 0 | 0.20 |
| E | 20 | 80 | 0 | 0.20 |
| Total wt.% | 50.00 | 34.00 | 16.00 | 1.00 |

### Inventive Film 2

| Layer | Dowlex (wt.%) | Agility (wt.%) | MB (wt.%) | Layer Ratio |
|---|---|---|---|---|
| A | 30 | 30 | 40 | 0.20 |
| B | 60 | 40 | 0 | 0.20 |
| C | 80 | 20 | 0 | 0.20 |
| D | 60 | 40 | 0 | 0.20 |
| E | 20 | 40 | 40 | 0.20 |
| Total wt.% | 50.00 | 34.00 | 16.00 | 1.00 |

### Inventive Film 3

| Layer | Dowlex (wt.%) | Agility (wt.%) | MB (wt.%) | Layer Ratio |
|---|---|---|---|---|
| A | 30 | 10 | 60 | 0.20 |
| B | 60 | 40 | 0 | 0.20 |
| C | 80 | 20 | 0 | 0.20 |
| D | 60 | 40 | 0 | 0.20 |
| E | 20 | 80 | 40 | 0.20 |
| Total wt.% | 50.00 | 38.00 | 12.00 | 1.00 |

**Table 1 - Film Properties**

| Property | CE 1 | CE2 | CE 3 | IE 1 | IE 2 | IE 3 |
|---|---|---|---|---|---|---|
| Tensile Stress | 24 | 23 | 23 | 22 | 20 | 22 |
| Tensile Strain | 587% | 570% | 602% | 607% | 591% | 606% |
| Light Transmission | 89.8% | 88.9% | 88.0% | 88.4% | 87.5% | 88.5% |
| Haze | 33.3% | 93.6% | 86.5% | 97.6% | 98.9% | 97.1% |
| IR Effectiveness | 40.7% | 68.8% | 63.3% | 75.6% | 82.3% | 76.8% |

### ASPECTS

In a first aspect, a greenhouse film comprising a first outer layer, a second outer layer, and one or more core layers, the one or more core layers positioned between the first outer layer and the second outer layer, a first core layer comprising a low density polyethylene and a linear low density polyethylene, and wherein the first outer layer comprises at least 10 wt.% of polymeric particles, based on the total weight of the first outer layer, a low density polyethylene, a compatibilizer, and a linear lower density polyethylene; the second outer layer comprises a low density polyethylene and a linear low density; and the film comprises from 5 to 10 wt.% polymeric particles, at least 30 wt.% low density polyethylene, and at least 35 wt.% of linear low density polyethylene, based on the total weight of the film.

In a second aspect, the greenhouse film of the first aspect, wherein the film comprises less than 10.0 wt.% polymeric particles, and from 70 to 90 wt.% linear low density polyethylene and low density polyethylene, based on the total weight of the film.

In a third aspect, the greenhouse film of the first or second aspect, wherein the first outer layer comprises at least 1 wt.% of a compatibilizer, based on the total weight of the first outer layer.

In a fourth aspect, the greenhouse film of the first, second, or third aspect, wherein the low density polyethylene of the first outer layer has a density of from 0.910 to 0.930 g/cm³ and a melt index (I2) from 0.1 to 1.0 g/10 min.

In a fifth aspect, the greenhouse film of the first, second, third, or fourth aspect, wherein the linear low density polyethylene of the first outer layer has a density of from 0.910 to 0.930 g/cm³ and a melt index (I2) from 0.1 to 1.5 g/10 min.

In a sixth aspect, the greenhouse film of first to fifth aspect, wherein the polymeric particles are acrylic beads comprising an alkylacrylate copolymer.

In seventh aspect, the greenhouse film of first to sixth aspect, wherein the first outer layer is between 15 to 30% of the total thickness of the film.

In an eighth aspect, the greenhouse film of first to seventh aspect, wherein each layer of the film is between 15 to 30% of the total thickness of the film.

In a ninth aspect, the greenhouse film of first to eighth, wherein the film has a thickness between 25 and 300 microns.

In a tenth aspect, the greenhouse film of first to ninth aspect, wherein the second outer layer comprises at least 10 wt.% of polymeric particles, based on the total weight of the second outer layer.

In an eleventh aspect, the greenhouse film of first to tenth aspect, wherein the film has at least five layers, and the first outer layer comprises at least 35 wt.% low density polyethylene, at least 45 wt.% linear low density polyethylene, and at least 10 wt.% polymeric particles, based on the total weight of the first outer layer.

In a twelfth aspect, the greenhouse film of first to eleventh aspect, wherein the first outer layer comprises from 5 to 10 wt.% of polymeric particles, from 25 to 50 wt.% of the low density polyethylene, and from 20 to 40 wt.% of the linear low density polyethylene, based on the total weight of the first outer layer.

In a thirteenth aspect, the greenhouse film of first to twelfth aspect, wherein the first core layer is directly adjacent to the first outer layer, and the first core layer comprises polymeric particles.

In a fourteenth aspect, the greenhouse film of any first to thirteenth aspect, wherein the film has at least one of the following properties: a tensile stress at break in the machine direction of at least 18 MPa; a tensile strain at break in the machine direction of at least 550%; a visible light transmission of at least 85%; a haze of at least 70%; and/or an IR effectiveness of at least 65%. In a fifteenth aspect, a process for making a greenhouse film comprising: adding a linear low density polyethylene, a low density polyethylene, and a masterbatch comprising a compatibilizer and polymeric particles to an extruder; extruding via the extruder a film comprising a first outer layer comprising polymeric particles, the low density polyethylene, and the linear lower density polyethylene, a first core layer comprising a low density polyethylene and a linear low density polyethylene, and a second outer layer comprising a low density polyethylene and a linear low density polyethylene; wherein the first outer layer comprises at least 10 wt.% of polymeric particles, based on the total weight of the first outer layer, and the film comprises from 5 to 10 wt.% polymeric particles, at least 30 wt.% low density polyethylene, and at least 35 wt.% of linear low density polyethylene, based on the total weight of the film.

## Claims

1. A greenhouse film comprising a first outer layer, a second outer layer, and one or more core layers, the one or more core layers positioned between the first outer layer and the second outer layer, a first core layer comprising a low density polyethylene and a linear low density polyethylene, and wherein the first outer layer comprises at least 10 wt.% of polymeric particles, based on the total weight of the first outer layer, a low density polyethylene, a compatibilizer, and a linear lower density polyethylene; the second outer layer comprises a low density polyethylene and a linear low density; and the film comprises from 5 to 10 wt.% polymeric particles, at least 30 wt.% low density polyethylene, and at least 35 wt.% of linear low density polyethylene, based on the total weight of the film.

2. The greenhouse film of any preceding claim, wherein the film comprises less than 10.0 wt.% polymeric particles, and from 70 to 90 wt.% linear low density polyethylene and low density polyethylene, based on the total weight of the film.

3. The greenhouse film of any preceding claim, wherein the first outer layer comprises at least 1 wt.% of a compatibilizer, based on the total weight of the first outer layer.

4. The greenhouse film of any preceding claim, wherein the low density polyethylene of the first outer layer has a density of from 0.910 to 0.930 g/cm³ and a melt index (I2) from 0.1 to 1.0 g/10 min.

5. The greenhouse film of any preceding claim, wherein the linear low density polyethylene of the first outer layer has a density of from 0.910 to 0.930 g/cm³ and a melt index (I2) from 0.1 to 1.5 g/10 min.

6. The greenhouse film of any preceding claim, wherein the polymeric particles are acrylic beads comprising an alkylacrylate copolymer.

7. The greenhouse film of any preceding claim, wherein the first outer layer is between 15 to 30% of the total thickness of the film.

8. The greenhouse film of any preceding claim, wherein each layer of the film is between 15 to 30% of the total thickness of the film.

9. The greenhouse film of any preceding claim, wherein the film has a thickness between 25 and 300 microns.

10. The greenhouse film of any preceding claim, wherein the second outer layer comprises at least 10 wt.% of polymeric particles, based on the total weight of the second outer layer.

11. The greenhouse film of any preceding claim, wherein the film has at least five layers, and the first outer layer comprises at least 35 wt.% low density polyethylene, at least 45 wt.% linear low density polyethylene, and at least 10 wt.% polymeric particles, based on the total weight of the first outer layer.

12. The greenhouse film of any preceding claim, wherein the first outer layer comprises from 5 to 10 wt.% of polymeric particles, from 25 to 50 wt.% of the low density polyethylene, and from 20 to 40 wt.% of the linear low density polyethylene, based on the total weight of the first outer layer.

13. The greenhouse film of any preceding claim, wherein the first core layer is directly adjacent to the first outer layer, and the first core layer comprises polymeric particles.

14. The greenhouse film of any preceding claim, wherein the film has at least one of the following properties: a tensile stress at break in the machine direction of at least 18 MPa; a tensile strain at break in the machine direction of at least 550%; a visible light transmission of at least 85%; a haze of at least 70%; and/or an IR effectiveness of at least 65%.

15. A process for making a greenhouse film comprising:
adding a linear low density polyethylene, a low density polyethylene, and a masterbatch comprising a compatibilizer and polymeric particles to an extruder;
extruding via the extruder a film comprising a first outer layer comprising polymeric particles, the low density polyethylene, and the linear lower density polyethylene, a first core layer comprising a low density polyethylene and a linear low density polyethylene, and a second outer layer comprising a low density polyethylene and a linear low density polyethylene; wherein the first outer layer comprises at least 10 wt.% of polymeric particles, based on the total weight of the first outer layer, and the film comprises from 5 to 10 wt.% polymeric particles, at least 30 wt.% low density polyethylene, and at least 35 wt.% of linear low density polyethylene, based on the total weight of the film.
